Europäisches Patentamt

(19) **European Patent Office**

**Office européen des brevets**

(11) Publication number: **0 215 847**
**B1**

(12) # EUROPEAN PATENT SPECIFICATION

(45) Date of publication of patent specification: **18.04.90**

(51) Int. Cl.⁵: **H 04 N 1/18, H 04 N 1/46**

(21) Application number: **86901697.2**

(22) Date of filing: **27.02.86**

(86) International application number:
**PCT/US86/00399**

(87) International publication number:
**WO 86/05641 25.09.86 Gazette 86/21**

(54) **APPARATUS AND METHOD FOR FORMING DIGITAL IMAGES.**

(30) Priority: **11.03.85 US 710206**
**11.03.85 US 710242**

(43) Date of publication of application:
**01.04.87 Bulletin 87/14**

(45) Publication of the grant of the patent:
**18.04.90 Bulletin 90/16**

(84) Designated Contracting States:
**DE FR GB**

(56) References cited:
**EP-A- 114 768**
**US-A-4 331 979**
**US-A-4 479 149**

**PATENTS ABSTRACTS OF JAPAN, vol.6, no.189
(E-133)(1067), 28 September 1982 & JP-A-
57101470**

(73) Proprietor: **EASTMAN KODAK COMPANY (a
New Jersey corporation)
343 State Street
Rochester New York 14650 (US)**

(72) Inventor: **MILCH, James, Roger
20 Burncoat Way
Pittsford, NY 14534 (US)**

(74) Representative: **Parent, Yves et al
Kodak-Pathé Département Brevets et Licences
Centre de Recherches et de Technologie Zone
Industrielle
F-71102 Chalon-sur-Saône Cédex (FR)**

## Description

Technical field

The present invention relates to a method and an apparatus that scans photographic negatives to produce a high resolution digital image having color information.

Background art

Solid-state image sensors generally have a linear or area organization. A linear sensor will often have a row of sensor elements (usually photodiodes or photocapacitors) and one or more CCD shift registers. The elements sample a line of light from a light image and integrate (accumulate) charge representative of light passing through image pixels. After this integration, the charge is transferred to a CCD shift register. The charge is shifted out of the shift register and converted by an MOS transistor or diode into a voltage signal. This voltage signal is converted into a numerical representation suitable for input to a digital image processor. The next line of the image is then moved in front of the linear sensor and the above process is repeated. The integration time for an element has to be sufficiently long compared to the time for readout to minimize smearing. Linear sensors are inherently time-limited for image sampling. They are not satisfactory for use in some applications such as for example high speed printers for making prints of film negatives. Such a high speed printer requires an area image sensor that is capable of measuring the transmittance of all the pixels of a film negative quite rapidly, with high accuracy, and at high spatial frequency. An area image sensor offers the advantage of increasing integration time for each sensor element without increasing the total time needed to sample the entire film negative. To make a high quality, high resolution, colored print of a photographic negative, in the order of about two million image pixels should be digitized for each color (red, green and blue) of a photographic negative and these digital signals must be processed to provide the desired output quality. Because such large amounts of data must be handled and processed, it has not been practical to use area image sensors to produce high resolution digital images of photographic negatives.

Also, when digital images are produced by linear sensors or area sensors where a sensor element only samples a single light image pixel, then if a sensor element is defective it produces a defective digital image pixel. In one technique the value of a nearest neighbor digital image pixel is substituted. In other words, the procedure is simply to remplace the value of a defective digital image pixel with the value of a nearest neighbor produced by another operative sensor element. In another technique interpolation of the values of nearest neighboring digital image pixels is used. See, for example, U.S. Patent US—A—4,253,120, issued February 24, 1981, which teaches that, if lower resolving optics for imaging onto a high resolution imager are employed, any given image spot will overlap more than one pixel; and, attendantly, when a pixel is bad, interpolation can be employed to obscure, in real time, the effect of such bad pixel. However, when an area image sensor having a sparse array of elements is used where each element senses a plurality of image pixels to produce a digital image, then some digital image pixels may not have nearest neighbors produced by other elements. In such a case the previous techniques for obviating the effect of one or more defective sensor elements may be less than acceptable.

The Japanese patent JP—A—57 101 470 discloses an image pickup control system having an optical means for focusing an image of a subject and photoelectric conversion means for producing electric signals in response to the focused image. This system comprises a photoelectric portion having photoelectric elements and means for displacing the photoelectric portion after the signals from the photoelectric elements are retained by retaining means. However, in this patent, nothing is disclosed converning the problem of the defective elements in the array. Due to the fact that the photoelectric portion has sparse elements of lower pitch, each and every one of the image pixels will have at least one nearest neighbour generated from a different detector element when using a straightforward Boustrophedral scan. In these conditions the problem of the defective elements could not exist, and said Japanese patent is of no utility for solving the above cited problem.

It is an object of this invention to scan photographic negatives and form a high resolution digital image having color information in a memory plane. Digital image processing techniques can be applied to the stored digital image to provide image enhancement.

Another object of this invention is to correct for the effects of a defective element in an area image sensor which overcomes prior art arrangements.

Disclosure of the invention

These objects are achieved by apparatus for forming an improved digital image from an original light image in a memory plane, comprising:

a) at least one area image sensor (24, 26, 28), having a sparse array of photosensitive elements which are exposed by pixels of the light image, said sparse array of photosensitive elements having a sensor element pitch of at least three pixels in both the horizontal and vertical directions;

b) means (30, 34, 36), for moving the light image relative to the sensor so that each element of the sensor is exposed to a plurality of light images pixels to produce analog signals; and

c) means (54, 55, 58, 59, 62) responsive to such analog signals for digitizing them and directing such digitized signals to appropriate locations in the memory plane (60) to form a digital image,

said apparatus being characterized in that said moving means moves the light image relative to the sensor in such a pattern that pixels of the digital image produced by the sensor elements have at least one nearest neighbour digital pixel produced by different sensor elements and in that it further comprises compensation means which, in the case of a defective element, employs the signal output from the said at least one nearest neighour digital pixel produced by the different sensor element to replace said defective element.

The invention also provides a method for forming an improved digital image produced by an area image sensor including a sparse array of photosensitive elements having a sensor element pitch of at least three pixels in both the horizontal and vertical directions comprising the steps of:

a) positioning a light image relative to the sensor to multiple expose each sensor element with different light image pixels;

b) converting each exposure of each element into a digital image pixel; and

c) moving the light image with respect to the sensor, between exposures;

said method being characterized in that the light image is moved with respect to the sensor in such a pattern that pixels of the digital image produced by the sensor elements have at least one nearest neighbour digital pixel produced by different sensor elements and in that it further comprises the steps of, in the case of a defective element, employing the signal output from the said at least one nearest neighbour digital pixel produced by the different sensor element to replace said defective element.

Brief description of the drawings

Figure 1a is a schematic showing of an area image sensor which can be used in accordance with the invention;

Figure 1b shows in more detail the organization of the area image sensor shown in Figure 1a;

Figure 1c and 1d illustrate a pattern by which elements of an area image sensor with an organization illustrated in Figures 1a and 1b, samples different pixels of a light image;

Figures 1e—1g illustrate improved light image sampling patterns according to the invention produced by elements of area image sensors where each element samples the same number of pixels of a light image as the Figure 1c pattern;

Figure 2 shows a scanning apparatus which uses three area image sensors in accordance with the present invention;

Figure 3 shows in block diagram form, the elements of a system for digitizing the output signals from the three area image sensors of Figure 2 and arranging the digital output signals spatially to form a digitized image in a memory plane; and

Figure 3a illustrates the coordinate system used throughout this disclosure for spatially arranging digital images.

Modes of carrying out the invention

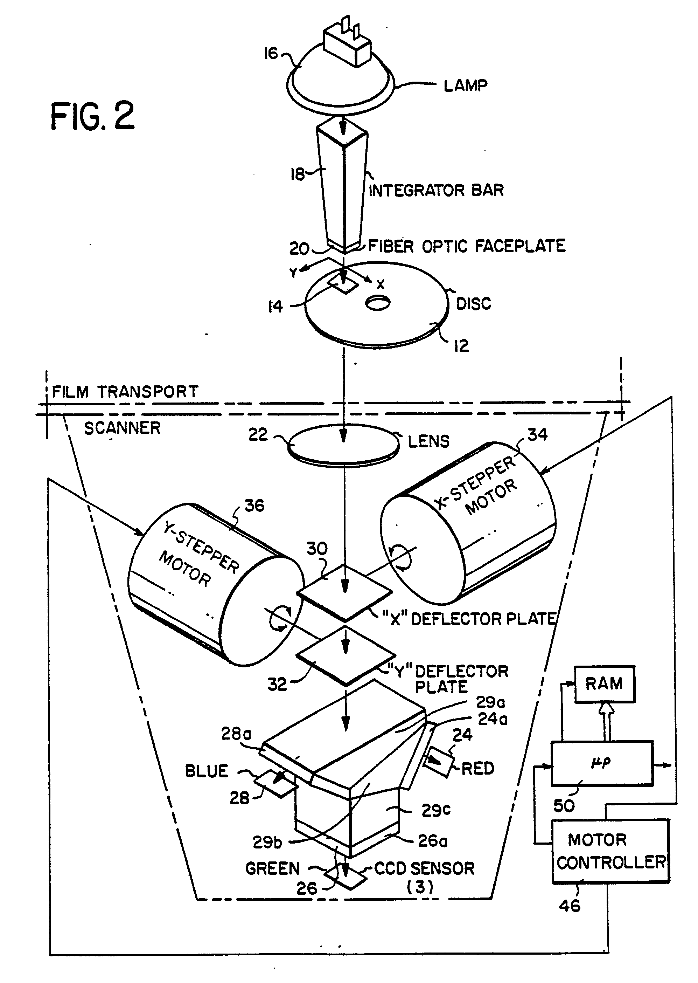

Figure 2 shows in schematic form a scanning apparatus 10 for scanning a film negative. The apparatus includes a disk member 12, for holding an original which is a photographic film negative 14. The film negative 14, is illuminated by light from a lamp mounted in a lamp housing 16. The lamp contained in this housing can for example be a 600 Watt tungsten lamp and the housing can include an eliptical reflector for collimating light from the lamp. A tapered integrating bar 18 along with a fiber optic face plate 20 produces diffused light (for scratch suppression). Light which passes through the negative is collected by a lens 22 and focused upon the surface of three area image sensors 24, 26 and 28.

Each of the area sensors 24, 26, and 28 are identical in construction and are panchromatic. However, sensor 24 receives only red colored light; sensor 26 receives only green colored; and sensor 28 receives only blue colored light. To this end, a beam splitter 29 is disposed between the lens 22 and sensors 24, 26, and 28. The beam splitter 29 separates three colored light beams (red, green, and blue) from light which is transmitted through the negative 14 and make take a number of well-known forms. For example, one conventional beam splitter (as illustrated in Figure 2) comprises three prism components—29a, 29b, and 29c. Prism 29a has a blue reflecting coating on the second surface encountered by the light beam. This surface is spaced from the second prism 29b by a small air gap so as to enhance the reflection of blue light. The second prism 29b and the third prism 29c are cemented at their interface with the inclusion of a metallic coating such as Inconel® (Reg. Trademark of International Nickel Company) between the second and third prism. The coating is not intended to provide color separation but instead reflects and transmits equal amounts of red and green light. Prism trim filters 24a, 26a, and 28a transmit separate red, green, and blue light beam images with the required spectral makeup to the respective area image sensors 24, 26, and 28. Each of these colored light beams forms a particular colored light image (or real image) of the film negative 14 which is focused on its sensor.

Between the lens 22 and the beam splitter 29, are disposed the two parallel-sided glass plates 30 and 32 respectively. The glass plates are made from optical glass such as that manufactured by Schott Optical Glass, Inc., No. BK 7-517642. Each glass plate has two optically flat surfaces and when rotated displaces the light image laterally. A relatively large angular rotation of these plates (2°) corresponds to a small translational movement of a light image (.002"=0.05 mm). These glass plates and their operation are more fully disclosed in European application EP—A—213188 entitled "Apparatus for Scanning and Sampling Real Images", inventor Spath et al, assigned to Eastman Kodak.

In addition, when glass plates are used the optical axis remains a straight line, thereby simplifying optical alignment. Image displacement is independent of the axial position of the glass plates or the lens focal length, which is not the case when a mirror is used for image displacement.

Rotation of the glass plate 32 about an axis of rotation translates the light image in the y-scan direction across the surface of each of the three area image sensors 24, 26 and 28 respectively. Similarly, rotation of the glass plate 30 about an axis of rotation causes translational movement of the light image in the x direction (orthogonal to the y direction) along the surface of each of the three area image sensors. A first stepper motor 34 is adapted to incrementally rotate glass plate 30 and a second stepper motor 36 is adapted to incrementally rotate glass plate 32. These stepper motors are each under the control of a stepper motor controller 46. A microprocessor (μ/p) 50 provides stepper motor control signals to the separate motor controller 46. Rather than stepper motors, a servo-control system could be used to move the glass plates.

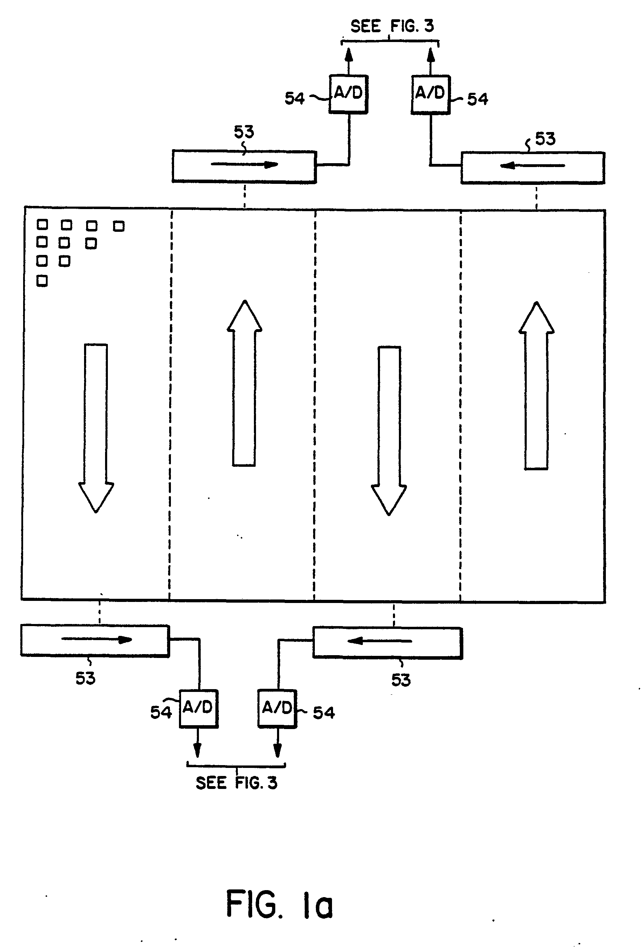

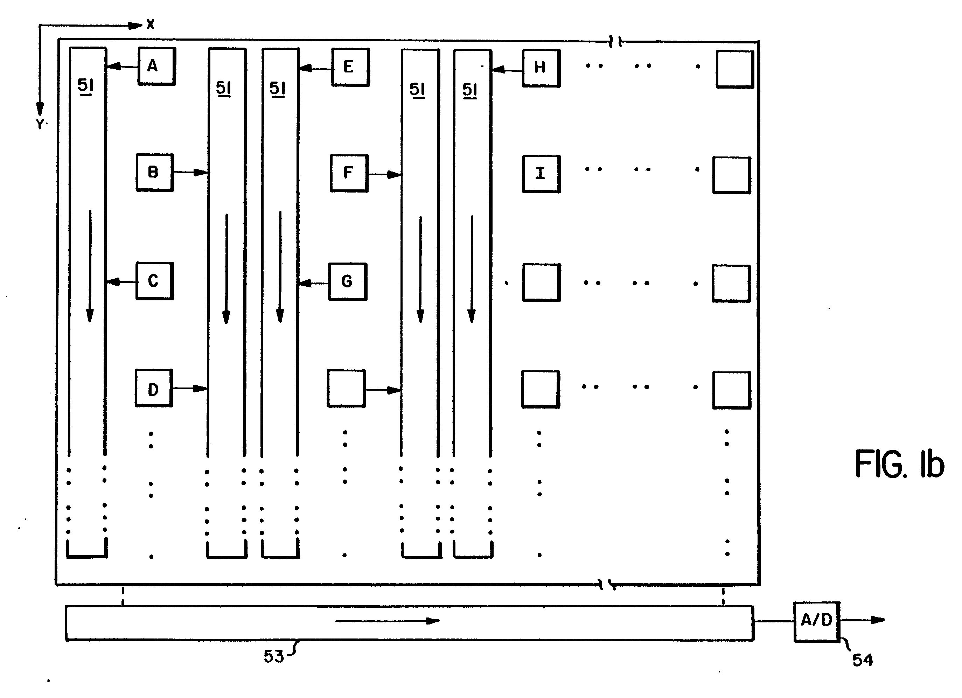

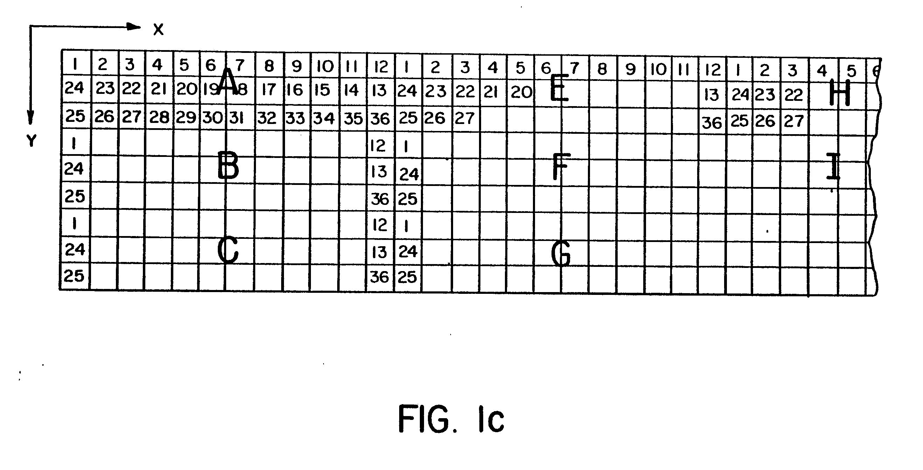

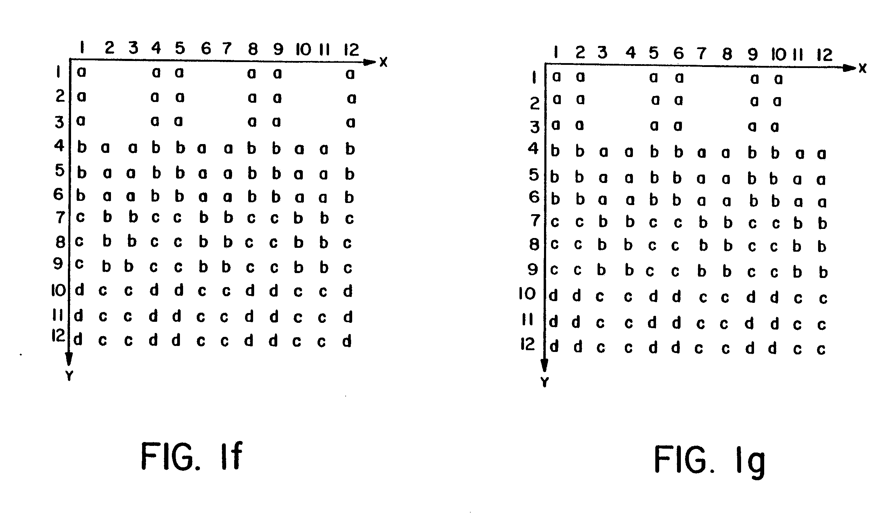

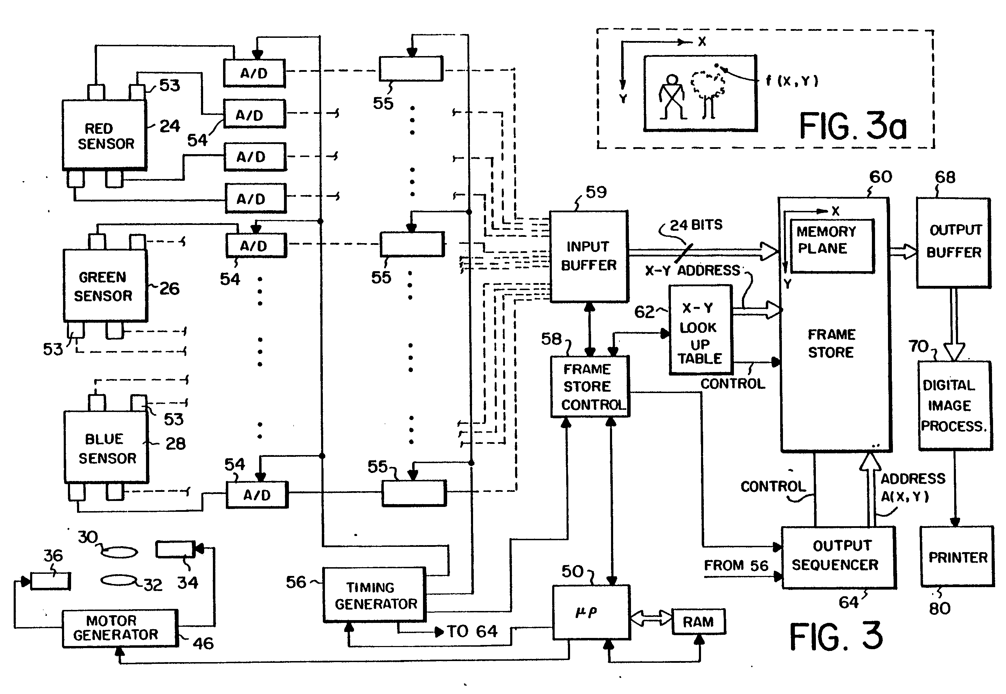

Figures 1a and 1b schematically show the general organization of an area image sensor having a sparse array of sensor elements which can be used in accordance with the invention. Several of the sensor elements which are shown in Figure 1b are identified as A, B, C, D, E, F, G, H and I. The elements are arranged in columns. Between each column there are conventional interline CCD shift registers 51. During an exposure cycle, each of the sensor elements samples a different pixel of the light image of the negative 14. For convenience of explanation, we will assume that for each sensor element, the origin is at the upper left hand position of that portion of the light image of the original from which the sensor will sample light image pixels. This coordinate system is shown in Figure 3a. For example, as shown in Figure 1c, assume that element A of Figure 1b samples light image pixel "1" at its position (1, 1) of the light image shown in Figure 1c. Each of the other elements B, C, D, E, F, G, H and I will also sample their own respective light image pixel "1" at their positions (1, 1).

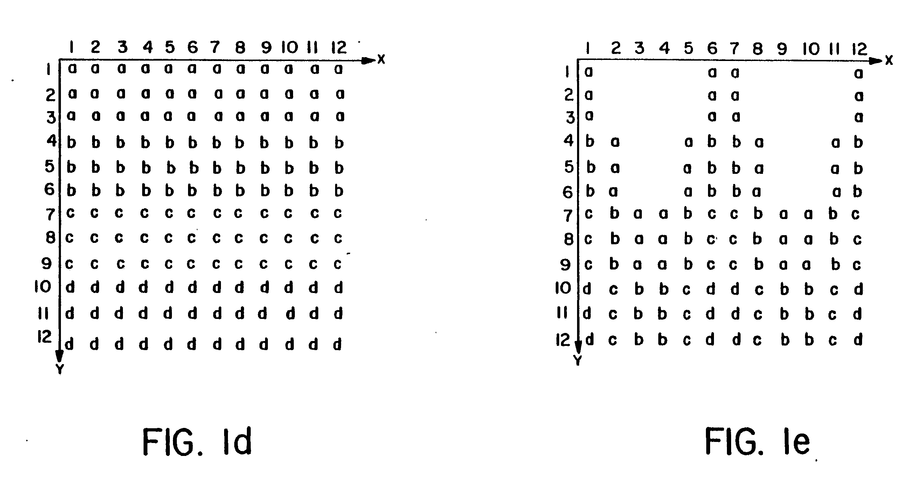

With reference to Figures 1c and 2, after each element samples its position at (1, 1) (light image pixel "1"), the microprocessor 50 delivers a signal to stepper controller 46 for stepper motor 34, which rotates plate 30 an increment so as to laterally translate the light image in the x direction an amount so that each element is now at its light image position (2, 1) and samples light image pixel 2. In a similar manner, after pixel 2 has been sampled, in order to sample pixel 3, the stepper motor 34 is again energized and incremented so that all of the elements sample their corresponding light image pixel 3; this continues to position 12. When light image pixel 13 is to be sampled, the stepper motor 36 however must be energized while motor 34 is not energized. In this case, the light image will be incrementally moved layerally in only the y direction. Subsequent incremental energization of stepper motor 34 will result in the sampling of image pixels 13 thru 24. Once again, motor 36 must be energized to sample pixel 25. Pixels 25 thru 36 are sampled by the subsequent incremental energization of motor 34. Each sensor element thus samples thirty-six (36) different light image pixels. As shown in Figure 1c, the light image pixels sampled form a block of 36 pixels organized in a rectangular 12×3 pattern. Figure 1d shows the identical arrangement of Figure 1c. However, the pixels sampled by element Are labelled "a". Similarly sensor B sensed pixels are labelled "b" and sensor C sensed pixels are labelled "c". If element C for example should be defective (drops out), the entire 12×3 labelled "c" block which was scanned will be lost. The usual recovery procedure for digital images where a pixel is defective, (to fill the lost region with its nearest neighbor), is not entirely effective here because not all of the unknown pixels have a known nearest neighbor. The ten pixels in the center of each interior block sampled by an individual sensor would have to be replaced not by a nearest neighhor, but by a next-nearest neighbor produced by other sensors. This problem will always occur when individual sensor elements respectively produce digital image pixels having at least three columns and at least three rows of digital pixels.

Figures 1e—1g show improved sampling patterns according to the present invention, in which this problem is solved.

Turning to Figure 1e, each sensor again samples 36 light image pixels. Stepper motor 34 and 36 are selectively incrementally energized by μ/p50. In sequence sensor A, for example, senses the following positions (x, y) of the light image: (1,1), (1, 2), (1, 3), (2, 4), (2, 5), (2, 6), (3, 7), (3, 8), (3, 9), (4, 9), (4, 8), (4, 7), (5, 6), (5, 5), (5, 4), (6, 3), (6, 2), (6, 1), (7, 1), (7, 2), (7, 3), (8, 4), (8, 5), (8, 6), (9, 7), (9, 8), (9, 9), (10, 9), (10, 8), (10, 7), (11, 6), (11, 5), (11, 4), (12, 3), (12, 2) and (12, 1).

Even with the limitation that the light image must not be moved more than one x incremental lateral step and one y incremental lateral step at a time, many patterns are possible. Figures 1e—g show only three representative sampling patterns or dither schemes which guarantee that every digital pixel has a neighbor scanned by a different element. Other patterns will suggest themselves to those skilled in the art. With any of these patterns, the loss of a single element will not cause substantial degradation of an output image. At the edges of a digital image there are pixels without a next-nearest neighbor produced by another sensor, and, along the top edge where there are holes. A hole is a pixel position which. has not been sampled by a sensor element. One can either trim the edges and/or fill the top edge holes with neighboring values. An example of a hole is at position (1, 3) of Figure 1e. It should be noted that the pattern of Figure 1g minimizes the number of holes.

It will be understood that each area image sensor could be comprised of a sparse array of either photodiodes or capacitor elements. The photocharge which is accumulated in either a photodiode or a photocapacitor is transferred to an interline CCD shift register 51. Those skilled in the art will appreciate that the shift registers 51 conveniently can be constructed as a buried channel two phase device.

In order to prevent charge smearing, alternate elements in a column of elements are read out into the interline shift register 51 on opposite sides of the column. This is best shown in Figure 1b. Each shift register 51 will be under the control of a plurality of electrodes (not shown). When a potential is applied to an electrode opposite an element, a depletion region is formed under that electrode. Consider for example an area image sensor which is formed with a p-substrate covered with a silicon dioxide layer on which there has been deposited a row of closely spaced electrodes for operating a shift register 51. When a positive potential is applied to any one of the electrodes, it repels the holes into the substrate. Lattice electrons are exposed and a depletion region is formed. The potential profile of the depletion region is referred to as a well.

Negative charge is of course accumulated under each element. After an adjacent well in a shift register is formed, and assuming the well is deeper than the charge region under the element, electrons will flow into the well of the shift register where they are free to move about but cannot penetrate the potential walls of the well. The potential profile (voltage) on the different electrodes of the shift register are now changed so that charge can be simultaneously shifted down each vertical shift register into four separate horizontal readout shift registers.

By using four horizontal readout shift registers 53 as shown in Figure 1a for each image area sensor, the output data rate can be greatly reduced; it is in fact, divided by four. The four large arrows shown in Figure 1a, indicate the direction of signal transfer from a sensor to the horizontal shift registers 53 and the smaller arrows indicate the direction of charge transfer through the horizontal shift registers 53. Each horizontal register 53 is directly connected to its own analog-to-digital converter 54.

As shown in Figure 3a, the light image of a negative which is sampled by the elements of the area image sensors can be considered to be a two-dimensional light intensity function f (x, y), where x and y denote spatial coordinates and the digital value of the function at any point (x, y) is proportional to the brightness or gray level of the image pixel which was sampled.

As shown in Figure 3, a digital image corresponding to a light image of a photographic negative is stored in a memory plane of a frame store 60. The memory plane is made up of a plurality of dynamic RAMs. The row and column numbers, x, y spatially identify a digital pixel. The value stored represents brightness or gray scale. In this case, for each digital image pixel 24 bits are stored; 8 bits gray scale for red, 8 bits gray scale for green and 8 bits for blue.

A single A/D converter 54 is connected to the output port of each sensor horizontal shift register 53. As shown there are twelve A/D converters 54.

Each A/D converter 54 is an 8 bit digitizer (256 gray levels). The microprocessor 50 provides the control signals to the stepper motor controller 46, timing generator 56 which provides timing signals to the image area sensors 24, 26 and 28, the A/D converters 54 and correction circuits 55. A correction circuit 55 is connected to each A/D converter 54 and will be understood to correct digital signal levels for sensor photosensitive errors. Timing generator 56 also provides timing signals to a frame store controller 58 and an output sequencer 64.

After corresponding pixels from sensors 24, 26, and 28 are digitized, they are combined in input buffer 59. A new 24 bit signal (3×8) is formed which represents red, green and blue levels. Thereafter, the frame store controller 58 provides a control signal to an x/y lookup table 62. Table 62 produces an address (x, y) which represents the location of the digital image pixel in the memory plane. The lookup table 62 causes each digitized image pixel (24 bits) to be stored in a particular cell in the memory plane corresponding to the location of the photographic negative from which the color information was scanned. When all of the cells of a memory plane are filled, a digital image is produced.

An output sequencer 64 is also under the control of the frame store control logic 58. It produces an address (x, y) for reading out a digital image pixel having color information content. An output buffer 68 sequentially stores digital image pixel data from a digital image. It will be understood that the control signals provided by logic associated with lookup table 62 provide refresh signals to the memory plane RAMs and also an enable signal which permits digital pixel information to be read into memory. The output sequencer 64 provides control signals which enable output digital pixels to be read out from a digital image in a memory plane.

The output buffer 68 delivers digital image pixel data to a digital image processor 70. The purpose of the digital image processor is to process a digital image so that a printer 80 will produce an output print which is more suitable for viewing than if processing had not taken place. It may function in accordance with image enhancing algorithms to achieve grain suppression, edge enhancement and tone scane enhancement. Examples of digital image processing algorithms are set forth in commonly assigned U.S. Patent Nos. 4,399,461, 4,442,454, and 4,446,484. Also an example of a printer 80, would be a laser printer.

When the scanning patterns shown in Figures 1e—g are used, the image processor also will be understood to include an aglorithm which will replace a digital image pixel produced by a defective sensor element. The algorithm will substitute the value of a digital image pixel produced by a nearest neighbor by an effective sensor element.

Briefly, the operation of the apparatus of Figures 2 and 3 will be described assuming that light image of the negative are scanned for four milliseconds (ms). We will further assume each area image sensor has an array of 60,000 elements. During each four ms of a scanning period, the 60,000 active elements on each sensor integrate the light transmitted by 60,000 light image pixels on the negative. At the end of this time, the integrated charges are transferred to the shift registers 51 and the glass plates 30, and 32 are selectively rotated to new positions. During the subsequent four ms scanning period, the charge packets are transferred out for processing via the vertical 51 and horizontal shift registers 53. The charge packets are digitized and transferred to the appropriate location in a memory plane. Simultaneously 60,000 new pixels are being integrated. After each element makes 36 samples, 2.16 million digital pixels for each sensor will have been produced and a high resolution digital image with color information content will have been formed in a memory plane.

If we assume for example that the entire negative must be read out in 140 ms with a 71.7% duty cycle, then the data rate in pixels (charge packets) per second is

$$\frac{2.16 \times 10^6 \text{ pixels}}{140 \times 0,717 \times 10^{-3} \text{ seconds}}$$

or about $22 \times 10^6$ pixels/s. At this data rate, there is a high likelihood of signal distortion. By using four separate output shift registers, the data is reduced from 22 MHz to 5.4 MHz. Digital pixels can be processed at this rate without distortion.

Industrial applicability

Apparatus for efficiently forming a digital image from a photographic negative is useful as a product, for example, in an output laser printer which makes prints from negatives.

The apparatus, which uses an area image sensor having a matrix of elements, has the advantage to permit well-known techniques to be used to provide high quality output images when a sensor element becomes defective (drops out).

It is another advantage of this apparatus that correction algorithms can be designed to replace defective digital image pixels with their nearest neighbors which are more simplified than algorithms which have to replace defective digital pixels with their next-nearest neighbors.

It is still another advantage of this apparatus that movement patterns selected in accordance with the invention minimize the appearance effects of sensitivity pattern noise in output images. Sensitivity pattern noise is the variability from element-to-element in the sensitivity of sensor elements.

**Claims**

1. Apparatus for forming an improved digital image from an original light image in a memory plane, comprising:
a) at least one area image sensor (24, 26, 28), having a sparse array of photosensitive elements which are exposed by pixels of the light image, said sparse array of photosensitive elements having a sensor element pitch of at least three pixels in both the horizontal and vertical directions;
b) means (30, 34, 36) for moving the light image relative to the sensor so that each element of the sensor is exposed to a plurality of light image pixels to produce analog signals; and
c) means (54, 55, 58, 59, 62) responsive to such analog signals for digitizing them and directing such digitized signals to appropriate locations in the memory plane (60) to form a digital image, said apparatus being characterized in that said moving means moves the light image relative to the sensor in such a pattern that pixels of the digital image produced by the sensor elements have at least one nearest neighbour digital pixel produced by different sensor elements and in that it further comprises compensation means which, in the case of a defective element, employs the signal output from the said at least one nearest neighbour digital pixel produced by the different sensor element to replace said defective element.

2. Apparatus as set forth in Claim 1, characterized by:
a) at least three interline area image sensors (24, 26, 28), with the elements of each sensor being substantially responsive to a particular region of the visible spectrum; and
b) means (29) for separating light from a light image of the negative into three beams of light, each having a different spectral region in the visible spectrum such that each beam respectively illuminates a sensor (24, 26, 28) having elements that are responsive to its beam's spectral region.

3. Apparatus as set forth in Claim 2, wherein each sensor includes a sparse array of panchromatic photosensitive elements arranged in columns and interline CCD shift register (51) disposed between such columns for receiving charge packets from the elements and sequentially transferring them; and further comprising:
a) at least two output shift registers (53) coupled to each sensor for sequentially transferring charge packets, each such output shift register being adapted to receive charge packets from particular interline shift registers (51) of its sensor;
b) beam splitting means (29) for separating light from a light image of the negative into three beams of light with each beam having a different region of the visible spectrum, each beam being directed to illuminate a particular sensor; and
c) processing means including analog-to-digital converter means (54) coupled to the output shift registers (53) for converting charge packets into digital pixel signals and means (58, 59, 62), for storing such digital signals in appropriate locations of the memory plane (60).

4. Apparatus as set forth in Claim 3, wherein said processing means includes means coupled to said analog-to-digital converter means (54) for providing digital pixel signals, each having a component produced from corresponding elements of each sensor and means (62) for addressing selected digital image pixel locations of said memory plane (60) and directing digital pixel signals into such locations to form the digital image.

5. Method forming an improved digital image produced by an area image sensor including a sparse array of photosensitive elements having a sensor element pitch of at least three pixels in both the horizontal and vertical directions comprising the steps of:

a) positioning a light image relative to the sensor to multiple expose each sensor element with different light image pixels;

b) converting each exposure of each element into a digital image pixel; and

c) moving the light image with respect to the sensor, between exposures;

said method being characterized in that the light image is moved with respect to the sensor in such a pattern that pixels of the digital image produced by the sensor elements have at least one nearest neighbour digital pixel produced by different sensor elements and in that it further comprises the step of, in the case of a defective element, employing the signal output from the said at least one nearest neighbour digital pixel produced by the different sensor element to replace said defective element.

6. Method as set forth in Claim 5, wherein each sensor element is exposed a sufficient number of times to produce at least three digital image pixels in three different columns.

**Patentansprüche**

1. Vorrichtung zum Erzeugen eines verbesserten digitalen Bildes von einem Original-Lichtbild in einer Speicherebene mit

a) mindestens einem flächenhaften Bildsensor (24, 26, 28), der eine Anordnung aus wenigen lichtempfindlichen Elementen aufweist, die mit Pixels des Lichtbildes belichtet werden, wobei diese Anordnung aus wenigen lichtempfindlichen Elementen eines Sensorelementeteilung von mindestens drei Pixels sowohl in horizontaler wie auch in vertikaler Richtung besitzt,

b) Mitteln (30, 34, 36) zum Bewegen des Lichtbildes relativ zu dem Sensor, so daß jedes Element des Sensors zu Erzeugung analoger Signale mit einer Vielzahl von Lichtbildpixels belichtet wird, und

c) Mitteln (54, 55, 58, 59, 62), die in Abhängigkeit von solchen analogen Signalen diese digitalisieren und die so erhaltenen digitalisierten Signale zu bestimmten Stellen der Speicherebene (60) lenken, um ein digitales Bild zu erzeugen,

dadurch gekennzeichnet, daß die Bewegungsmittel das Lichtbild relativ zu dem Sensor in einer solchen Weise bewegen, daß Pixels des von den Sensorelementen erzeugten digitalen Bildes mindestens ein direkt benachbartes, von anderen Sensorelementen erzeugtes digitales Pixel besitzen und daß die Vorrichtung außerdem Kompensationsmittel aufweist, die im Falle eines fehlerhaften Elements unter Verwendung des Signalausgangs des mindestens einen direkt benachbarten, von einem anderen Sensorelement erzeugten digitalen Pixels das fehlerhafte Element ersetzen.

2. Vorrichtung nach Anspruch 1, gekennzeichnet, durch

a) mindestens drei flächenhafte Farbauszugs-Bildsensoren (24, 26, 28), deren Elemente jeweils im wesentlichen für einen bestimmten Bereich des sichtbaren Spektrums empfindlich sind, und

b) Mittel (29), die das von einem Lichtbild des Negativs ausgehende Licht in drei Strahlenbündel aufteilen, von denen jedes einem anderen Spektralbereich des sichtbaren Spektrums entspricht, so daß jedes Strahlenbündel jeweils einen Sesnsor (24, 26, 28) beleuchtet, dessen Elemente für den Spektralbereich dieses Strahlenbündels empfindlich sind.

3. Vorrichtung nach Anspruch 2, dadurch gekennzeichnet, daß jeder Sensor eine Anordnung aus wenigen panchromatischen lichtempfindlichen Elementen aufweist, die in Spalten angeordnet sind, sowie zwischengeschaltete CCD-Schieberegister (51), die zwischen den Spalten angeordnet sind und Ladungspakete von den Elementen empfangen und nacheinander übertragen, und daß

a) mindestens zwei Ausgangsschieberegister (53) mit jedem Sensor gekoppelt sind, um die Ladungspakete nacheinander zu übertragen, wobei jedes Ausgangsschieberegister Ladungspakete von bestimmten zwischengeschalteten Schieberegistern (51) seines Sensors empfangen kann,

b) eine Strahlenteilereinrichtung (29) vorgesehen ist, um das von einem Lichtbild des Negativs ausgehende Licht in drei Strahlenbündel aufzuteilen, die jeweils einem anderen Bereich des sichtbaren Spektrums entsprechen und so ausgerichtet sind, daß sie jweils einen bestimmten Sensor beleuchten,

c) eine Verarbeitungseinrichtung miz einem mit den Ausgangsschieberegistern (53) gekoppelten Analog-Digitalwandler (54) vorgesehen ist, um Ladungspakete in digitale Pixelsignale umzuwandeln, und daß Mittel (58, 59, 62) zum Speichern solcher digitaler Signale an geeigneten Stellen in der Speicherebene (60) vorgesehen sind.

4. Vorrichtung nach Anspruch 3, dadurch gekennzeichnet, daß die Verarbeitungseinrichtung Mittel aufweist, die mit dem Analog-Digitalwandler (54) gekoppelt sind, um digitale Pixelsignale zu liefern, wobei jedes dieser Mittel eine von den entsprechenden Elementen eines jeden Sensors erzeugte Komponente sowie Mittel (62) aufweist, mit denen bestimmte digitale Bildpixelstellen in der Speicherebene (60) angesteuert und digitale Pixelsignale zur Erzeugung des digitalen Bildes zu solchen Stellen gelenkt werden.

5. Verfahren zur Erzeugung eines verbesserten digitalen Bildes mittels eines flächenhaften Bildsensors, der eine Anordnung aus wenigen lichtempfindlichen Elementen mit einer Sensorelementeteilung von mindestens drei Pixels sowohl in der horizontalen wie auch der vertikalen Richtung aufweist, wobei in mehreren Arbeitsschritten

a) ein Lichtbild relativ zu dem Sensor so positioniert wird, daß jedes Sensorelement mehrfach mit unterschiedlichen Pixels des Lichtbildes belichtet wird.

b) jede Belichtung eines jeden Elements in ein digitales Bildpixel umgewandelt wird, und

c) das Lichtbild zwischen den Belichtungen gegenüber dem Sensor bewegt wird,

dadurch gekennzeichnet, daß das Lichtbild gegenüber dem Sensor in einer solchen Weise bewegt wird, daß Pixels des von den Sensorelementen erzeugten digitalen Bildes mindestens ein direkt benachbartes, von anderen Sensorelementen erzeugtes digitales Pixel besitzen, und daß im Falle eines fehlerhaften Elements der Signalausgang dieses mindestens einen direkt benachbarten, von einem anderen Sensorelement erzeugten digitalen Pixels dazu dient, das fehlerhafte Element zu ersetzen.

6. Verfahren nach Anspruch 5, dadurch gekennzeichnet, daß jedes Sensorelement so oft belichtet wird, daß es mindestens drei digitale Bildpixels in drei verschiedenen Spalten erzeugt.

**Revendications**

1. Appareil pour former une image numérique améliorée a partir d'une image lumineuse originale dans un plan mémoire, et comprenant:

a) au moins un capteur d'image (24, 26, 28) comprenant un réseau épars d'éléments photosensibles exposées aux pixels (éléments d'image) de l'image lumineuse ledit réseau épars d'éléments photosensibles ayant ses éléments de détection disposés selon un pas d'au moins trois pixels aussi bien dans la direction verticale que dans la direction horizontale;

b) des moyens (30, 34, 36) pour déplacer l'image lumineuse par rapport au capteur de telle sorte que chaque élément du capteur soit exposé à une pluralité de pixels de l'image lumineuse, afin de produire des signaux analogues; et

c) des moyens (54, 55, 58, 59, 62) sensibles à ces signaux analogiques afin de les numériser et de diriger ces signaux numériques vers des zones appropriées du plan mémoire (60) afin de former une image numérique,

ledit appareil étant caractérisé en ce que lesdits moyens (30, 34, 36) déplacent l'image lumineuse par rapport au capteur selon un modèle tel, que les pixels de l'image numérique produite par les éléments de détection aient au moins un de leurs pixels voisins les plus proches produit par un élément de capteur différent et en ce qu'il comprend en plus des moyens de compensation qui, dans le cas d'un élément défectueux, utilisent la sortie du signal de ce pixel voisin le plus proche produit par l'élément de capteur différent pour remplacer ledit élément défectueux.

2. Appareil selon la revendication 1, caractérisé par:

a) au moins trois capteurs d'image à interlignes (24, 26, 28), les éléments de chaque capteur étant sensibles substantiellement à une zone particulière du spectre visible; et

b) des moyens (29) pour séparer la lumière, provenant d'une image lumineuse d'un négatif, en trois pinceaux lumineux, chacun de ces pinceaux étant dans une zone spectrale différente du spectre visible de telle sorte que chaque pinceau éclaire respectivement un capteur (24, 26, 28) ayant des éléments sensibles au spectre de son pinceau.

3. Appareil selon la revendication 2, dans lequel chaque capteur comprend un réseau épars d'éléments photosensibles panchromatiques arrangés en colonnes et des registres d'interlignes CCD (51) à décalage disposés entre lesdites colonnes pour recevoir les paquets de charges provenant desdits éléments et les transférer séquentiellement; et comprenant en plus:

a) au moins deux registres à décalage de sortie (53) couplés à chaque capteur pour transférer séquentiellement les paquets de charges, chacun de ces registres de sortie étant adapté pour recevoir des paquets de charges provenant de registres d'interlignes particuliers de son capteur;

b) des moyens (29) de division d'un faisceau pour séparer la lumière, provenant de l'image lumineuse du négatif, en trois pinceaux lumineux, chacun de ces pinceaux étant dans une zone spectrale différente du spectre visible, et chacun de ces pinceaux étant dirigé de façon à éclairer un capteur paticulier; et

c) des moyens de traitement comprenant des moyens de conversion (54) analogique-numérique couplés aux registres à décalage de sortie (53) pour convertir les paquets de charges en signaux numériques, et des moyens (58, 59, 62) pour stocker lesdits signaux numériques dans des zones appropriées du plan mémoire (60).

4. Appareil selon la revendication 3, dans lequel lesdits moyens de traitement incluent des moyens couplés auxdits convertisseurs analogique-numérique (54) fournissant des signaux numériques, chacun de ces signaux ayant une composante produite par les éléments correspondants de chaque capteur, et des moyens (62) pour adresser des zones choisies de stockage des signaux numériques du plan mémoire (60) et pour diriger lesdits signaux numériques dans lesdites zones choisies du plan mémoire afin de former l'image numérique.

5. Procédé de formation d'une image numérique améliorée produite par un capteur d'image comprenant un réseau épars d'éléments photosensibles dont les éléments de détection sont disposés selon un pas d'au moins trois pixels aussi bien dans la direction horizontale que la direction verticale, dans lequel:

a) on positionne une image lumineuse par rapport au capteur de façon à avoir plusieurs expositions de chaque élément de détection à différents pixels de l'image lumineuse,

b) on convertit chaque exposition de chaque élément en un pixel numérique; et

c) on déplace l'image lumineuse, par rapport au capteur, entre les expositions;

ledit procédé étant caractérisé en ce que l'on déplace l'image lumineuse par rapport au capteur selon un modèle tel que les pixels de l'image numérique produite par les éléments de détection ont au moins un de leurs pixels voisins les plus proches produit par un élément de capteur différent, et en ce que dans l'hypothèse d'un élément défectueux, on utilise la sortie de signal de ce pixel voisin le plus proche produit par élément de détection différent pour remplacer ledit élément défectueux.

6. Procédé selon la revendication 5, dans lequel chaque élément de détection est exposé un nombre suffisant de fois pour produire au moins trois pixels numériques dans trois colonnes différentes.

SEE FIG. 3

54 — A/D    A/D — 54

53    53

53    53

54 — A/D    A/D — 54

SEE FIG. 3

FIG. 1a

FIG. lb

A/D — 54

51

51

51

51

51

53

A B C D

E F G

H I

X Y

EP 0 215 847 B1

FIG. 1c

EP 0 215 847 B1

FIG. 1d

| | 1 | 2 | 3 | 4 | 5 | 6 | 7 | 8 | 9 | 10 | 11 | 12 |
|----|---|---|---|---|---|---|---|---|---|----|----|----|
| 1 | a | a | a | a | a | a | a | a | a | a | a | a |
| 2 | a | a | a | a | a | a | a | a | a | a | a | a |
| 3 | a | a | a | a | a | a | a | a | a | a | a | a |
| 4 | b | b | b | b | b | b | b | b | b | b | b | b |
| 5 | b | b | b | b | b | b | b | b | b | b | b | b |
| 6 | b | b | b | b | b | b | b | b | b | b | b | b |
| 7 | c | c | c | c | c | c | c | c | c | c | c | c |
| 8 | c | c | c | c | c | c | c | c | c | c | c | c |
| 9 | c | c | c | c | c | c | c | c | c | c | c | c |
| 10 | d | d | d | d | d | d | d | d | d | d | d | d |
| 11 | d | d | d | d | d | d | d | d | d | d | d | d |
| 12 | d | d | d | d | d | d | d | d | d | d | d | d |

FIG. 1e

| | 1 | 2 | 3 | 4 | 5 | 6 | 7 | 8 | 9 | 10 | 11 | 12 |
|----|---|---|---|---|---|---|---|---|---|----|----|----|
| 1 | a | | | | a | a | | | | | | a |
| 2 | a | | | | a | a | | | | | | a |
| 3 | a | | | | a | a | | | | | | a |
| 4 | b | a | | | a | b | b | a | | | a | b |
| 5 | b | a | | | a | b | b | a | | | a | b |
| 6 | b | a | | | a | b | b | a | | | a | b |
| 7 | c | b | a | a | b | c | c | b | a | a | b | c |
| 8 | c | b | a | a | b | c | c | b | a | a | b | c |
| 9 | c | b | a | a | b | c | c | b | a | a | b | c |
| 10 | d | c | b | b | c | d | d | c | b | b | c | d |
| 11 | d | c | b | b | c | d | d | c | b | b | c | d |
| 12 | d | c | b | b | c | d | d | c | b | b | c | d |

EP 0 215 847 B1

```
   1  2  3  4  5  6  7  8  9 10 11 12        X
 1 a        a  a        a  a        a
 2 a        a  a        a  a        a
 3 a        a  a        a  a        a
 4 b  a  a  b  b  a  a  b  b  a  a  b
 5 b  a  a  b  b  a  a  b  b  a  a  b
 6 b  a  a  b  b  a  a  b  b  a  a  b
 7 c  b  b  c  c  b  b  c  c  b  b  c
 8 c  b  b  c  c  b  b  c  c  b  b  c
 9 c  b  b  c  c  b  b  c  c  b  b  c
10 d  c  c  d  d  c  c  d  d  c  c  d
11 d  c  c  d  d  c  c  d  d  c  c  d
12 d  c  c  d  d  c  c  d  d  c  c  d
 Y
```

# FIG. 1f

```
   1  2  3  4  5  6  7  8  9 10 11 12        X
 1 a  a        a  a        a  a
 2 a  a        a  a        a  a
 3 a  a        a  a        a  a
 4 b  b  a  a  b  b  a  a  b  b  a  a
 5 b  b  a  a  b  b  a  a  b  b  a  a
 6 b  b  a  a  b  b  a  a  b  b  a  a
 7 c  c  b  b  c  c  b  b  c  c  b  b
 8 c  c  b  b  c  c  b  b  c  c  b  b
 9 c  c  b  b  c  c  b  b  c  c  b  b
10 d  d  c  c  d  d  c  c  d  d  c  c
11 d  d  c  c  d  d  c  c  d  d  c  c
12 d  d  c  c  d  d  c  c  d  d  c  c
 Y
```

# FIG. 1g

# FIG. 2

FIG. 3a

FIG. 3